# EUROPEAN PATENT APPLICATION

(11) **EP 4 819 530 A1**
(43) Date of publication of application: **07.10.2026**
(21) Application number: 25168297.7
(22) Date of filing: 03.04.2025
(51) Int. Cl.: H04L 9/00, H04L 9/08, H04L 9/32

(54) **SECURE TRANSITION OF DEVICE TRUST ANCHORS**

(71) Applicant: Siemens Aktiengesellschaft, 80333 München (DE)
(72) Inventor: De Santis, Fabrizio, 80634 München (DE); Vaira, Antonio, 81379 München (DE)
(74) Representative: Siemens Patent Attorneys

(57) **Abstract**

A method for secure replacement of a device trust anchor for a device associated with a device manufacturer is proposed. The method comprises the steps of
a) providing the device with a trust anchor comprising a public key of a PKI key pair associated with the device manufacturer,
b) generating a one-time key pair,
c) preparing the device for replacing the public key of the PKI key pair with a new public key by an update secured via a private key of the one-time key pair,
d) generating a new PKI key pair,
e) providing an update to the device including the public key of the new PKI key pair and a signature from the private key of the one-time key pair,
f) verifying the signature via the public key of the one-time key pair and
g) installing the new public key of the new PKI key pair.

In particular, the invention allows for secure transition from classical to post-quantum algorithms but is also useful for other scenarios with high security requirements.

## Description

The invention relates to a method and a system for secure replacement of a device trust anchor.

Governments and cybersecurity agencies are increasingly putting pressure on transitioning to post-quantum cryptography. However, there is still uncertainty regarding what digital signature algorithms will be finally necessary and will be secure in the future.

Currently, there are three post-quantum digital signature algorithms (Dilithium, Falcon, SPHINCS+) under standardization at the NIST (National Institute of Standards and Technology). More post-quantum digital signature algorithms are expected to be standardized in the future due to an additional standardization effort (cf. new NIST standardization project for additional post-quantum digital signatures, https://www.nist.gov/news-events/news/2023/07/nist-announces-additional-digital-signature-candidates-pqc-standardization).

Hence, it is possible that multiple cryptographic transitions will be needed during the lifetime of a device, i.e., transitioning a device from a pre-quantum (classical) digital signature algorithm to a post-quantum one and from a post-quantum digital signature algorithm to another. Additionally, given that post-quantum digital signature algorithms are relatively new and underwent only few years of cryptanalysis, weaknesses might be discovered in the future, increasing the likelihood of further transitions in the future.

One of the main tools to perform a cryptographic transition is via firmware/software update. Firmware/software update tools employ digital signatures to perform secure updates. Digitally signed updates are validated against a locally stored trust anchor before being installed on a device. A trust anchor, in this context, is a plain public key or a public key including metadata like a X.509 certificate (root certificate) or any other type of public key digital certificate.

Therefore, as a precondition to a transition via firmware/software update, it is necessary to update the trust anchor. However, it is possible that the new digital signature algorithm is not yet known at the time of device manufacturing and trust anchor imprinting. If the current trust anchor has been compromised during the lifetime of the device, then it is not possible to update the trust anchor using firmware/software updates. This situation is illustrated by way of the following example: devices currently have trust anchors based on DSA (Digital Signature Algorithm), but in future, they should be updated to use SPHINCS+. However, the SPHINCS+ standard is not yet finalized and cannot be utilized at present (or, if utilized, it shall be migrated as the standard is finalized). If DSA is broken, before the trust anchor has been updated to SPHINCS+, this might be an issue. Please note that this situation may occur for any transition in the future, e.g., if there is a need to transition from SPHINCS+ to another algorithm or set of parameters.

In cryptographic systems with hierarchical structure, a trust anchor is an authoritative entity for which trust is assumed and not derived. In the X.509 architecture, a root certificate would be the trust anchor from which the whole chain of trust is derived. The trust anchor must be in the possession of the trusting party beforehand to make any further certificate path validation possible
(see https://en.wikipedia.org/wiki/Trust_anchor).

Classical digital signature algorithms are:
- DSA (Digital Signature Algorithm):
   https://de.wikipedia.org/wiki/Digital_Signature_Algorithm
- ECDSA (Elliptic Curve Digital Signature Algorithm):
   https://en.wikipedia.org/wiki/Elliptic_Curve_Digital_Signature_Algorithm
- EdDSA (Edwards-Curve Digital Signature Algorithm): https://www.rfceditor.org/rfc/rfc8032

Stateless post-quantum digital signature algorithms are:
- CRYSTALS-Dilithium is currently under standardization at the NIST with the name ML-DSA, NIST FIPS 204: https://csrc.nist.gov/pubs/fips/204/ipd
- SPHINCS+ is currently under standardization at the NIST with the name SHB-DSA, NIST FIPS 205: https://csrc.nist.gov/pubs/fips/205/ipd
- Falcon will be standardized at the NIST (timeline still unclear)

Stateful post-quantum digital signature algorithms are:
- XMSS and XMSS^MT: The eXtended Merkle Signature Scheme (XMSS) algorithm is a stateful hash-based signature scheme described in the RFC 8391 (https://tools.ietf.org/html/rfc8391). XMSS^MT is the multi-tree variant of XMSS which is also described in the RFC 8391 and NIST SP 800-28. The invention described below also applies to XMSS^MT.
- LMS and HSS: The Leighton-Micali Signature (LMS) is another stateful hash-based signature scheme similar to XMSS, and its multi-tree version is called HSS. They are described in the RFC 8554 (https://tools.ietf.org/html/rfc8554).

Recommendations regarding the choice of security parameters for stateful post-quantum digital signature algorithms and further considerations on their operability are described in the NIST SP 800-28 (https://nvlpubs.nist.gov/nistpubs/SpecialPublications/NIST.SP.800-208-draft.pdf).

A hybrid digital signature algorithm is a digital signature algorithm that combines of more digital signature algorithms, e.g., classic and a post-quantum digital signature algorithm.

The problem of the invention is to provide for a secure migration of trust anchors that also works in complex scenarios such as migration to new cryptographic technology.

The problem is solved by a method according to claim 1 and a system according to claim 10.

Advantageous embodiments are provided in the dependent claims.

The method according to the invention aims at secure replacement of a device trust anchor for a device. A trust anchor is typically understood to consist of a data entity that allows within a PKI to verify the integrity and authenticity of cryptographic data. Below, the trust anchor is assumed to comprise a public key of a key pair. The public key may be a raw public key such as a sequence of bits cryptographically generated using a key generation algorithm. The trust anchor may consist of such a raw public key or a certificate, where a certificate is a raw public key with some metadata (e.g. key validity period, key can be used only for a certain purpose, etc.). The public key could also include additional data related to verification. Thus, it may not only be a raw public key (the term "plain public key" is also common) but could also be a public key including metadata like a X.509 certificate (root certificate) or any other type of public key digital certificate.

It is assumed that the device anchor is associated with a device manufacturer. The term "device manufacturer" is to be construed to signify the party responsible for device software updates after providing it to a customer. Thus, the device manufacturer is not necessarily the hardware manufacturer but could be another entity responsible of software features of the device. Typically, such a manufacturer would operate a server that distributes updates to devices. Also, updating devices could be assigned to some contractor or integrator running the server from which updates are provided.

The term "server" does not necessarily signify one physical server but could relate to server pool resources (e.g., server farm) or a virtual server. Also, physical server resources used for updates in the context of an inventive method need not stay the same throughout the method. Accordingly, the term "server" below is to be interpreted as resources that implement the requisite server functions for software updates as required by inventive methods.

For the sake of readability and comprehensibility, steps of the inventive method are numbered with letters. The numbering is not to be understood to prescribe a fixed chronological order. Such an order can only be assumed if necessary for logical/physical reasons.

A step a) of the inventive method calls for providing the device with a trust anchor by the device manufacturer comprising a public key of a key pair (such as a PKI key pair or a raw key pair) of the device manufacturer. This public key may be meant for validation and verification of manufacturer/integrator software installations/updates, firmware updates etc. The associated cryptographic scheme may be one of those mentioned in the introductory part, but the invention is not limited to them.

Another step b) features the generation of a one-time key pair. Here, "one-time key pair" refers to a one-time signature schemes (OTS) with a key pair that can be used only once. This one-time key pair may e.g. be of the Lamport or Winternitz type. The device is prepared for replacing the public key of the PKI key pair with a new public key by an update secured via a private key of this one-time key pair (step c). Step c) may comprise or consist in that the device is provided with the public key of the one-time key pair. Other variants are possible, though. A deviating embodiment features a hash or Merkle tree. Details of this embodiment are put forth further below.

Preferably and typically, steps a) and c) are performed in a trusted environment with the device secured from outside interference, such as a manufacturing site of a device manufacturer. More generally, steps a), b), c), and d) or a combination thereof can be performed in a trusted environment.

In step d), a new PKI key pair is generated for replacing the trust anchor. Typically, there is a new digital signature algorithm that is employed für the new PKI key pair. The migration to a new cryptographic scheme may be triggered by new security requirements or new technology which may not have been available when the device was manufactured (e.g. post-quantum cryptology algorithms such as Dilithium, Falcon, or SPHINCS+). The public key of the new PKI pair is provided in an update to the device (step e)). Crucially, this update is secured via a signature from the private key of the one-time key pair. OTS (one-time signature) schemes are considered to benefit from high security and were promoted to provide protection also in a post-quantum cryptography environment. The update of step e) may comprise software for installation of an algorithm used with the new PKI key pair. Alternatively, an update with software for installation of an algorithm used with the new PKI key pair and a signature from the private key of the key pair in use (old key pair) is sent prior to step e).

After reception of the update, verification of the signature is performed via the public key of the one-time key pair (step f) and the new public key of the new PKI key pair is installed (step g). The public key replaced by the new public key and/or the software for using the algorithm associated with the replaced public key may be removed from the device after installation of the new public key.

The trust anchor replacement via OTS key may be repeated (possibly for transition from a post-quantum digital signature algorithm to another one). For instance, another or a further one-time key pair may be generated for the next trust anchor replacement and the public key of this one-time key pair may be included in the update of step e). Alternatively, it may be sent in an update signed with the private key of the new PKI key pair.

According to an embodiment, a hash or Merkle tree is used. Then steps b) and c) comprise the generation of multiple one-time keys from which a tree is built. The device is provided with the root-hash value of the tree. In step e), information for calculating the root-hash value is included in the update, e.g. validation path, and a private one-time key of the tree is used for the signature of the update. The corresponding public key can be included in the update, too. The signature of the update of step e) is verified by calculating the root-hash, i.e. the device calculates the root-hash value via path information received from the update and compares it with the value of step c).

A hash or Merkle tree can be used with a number of key pairs corresponding to the number of its nodes. Once the key pairs are used up updates may resort to a scheme from another embodiment, i.e. generating additional OTS key-pairs and providing the public key via updates either together with a new trust anchor (with OTS signature) or separate update (with signature from the PKI pair in use).

Below, embodiments of the invention are described with reference to figures. The figures show
Fig. 1: a flow chart of a state-of-the-art scenario for updating the key used by a device,
Fig. 2: an illustration of a concept according to the invention,
Fig. 3: a flow chart of an embodiment of the invention,
Fig. 4: a flow chart of an alternative embodiment of the invention,
Fig. 5: an illustration of public keys as part of a hash tree,
Fig. 6: an illustration of a concept according to the inven-tion,
Fig. 7: a Merkle tree and
Fig. 8: an embodiment of the invention that employs a Merkle tree.

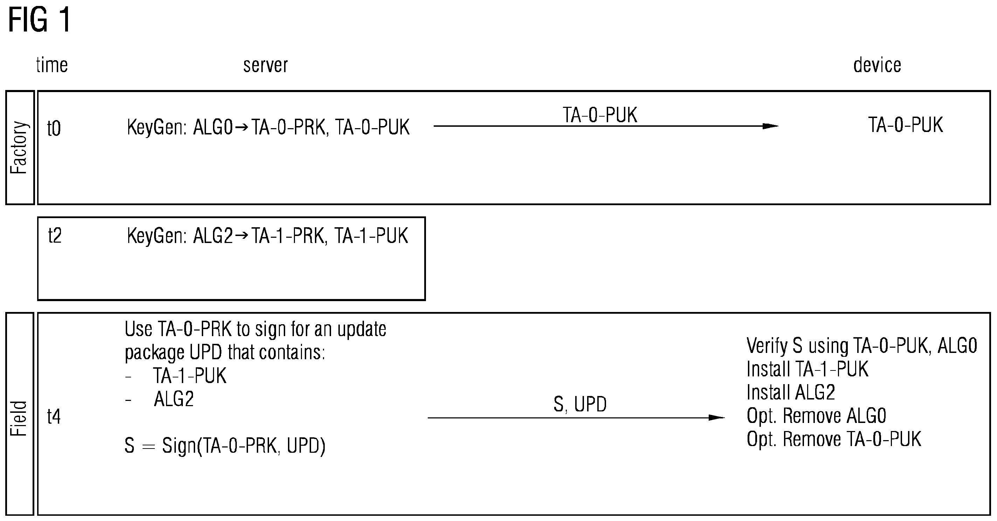

Fig. 1 shows a state-of-the-art scenario for updating the key used by a device. The device is produced by a manufacturer in a factory. Part of the device set-up is the preparation for safe communication prior to deployment/roll-out. A key pair is generated (KeyGen) with an algorithm ALG0 (here and below the term "algorithm" is short for "digital signature algorithm") resulting in a private key TA-0-PRK and a public key TA-0-PUK. Typically, the key generation is performed by a server, e.g. using a Hardware Security Module (HSM). Afterwards, the public key TA-0-PUK is transferred to the device and placed at secure storage, e.g., integrity protected. The transfer is considered to be secure as part of the manufacturing process. In Fig. 1 this initial phase is assigned the time t0 which signifies that it precedes deployment of the device. Once the device is in the field software updates by the manufacturer are sent by the server signed via the private key TA-0-PRK and verified by the device with the public key TA-0-PUK.

At some point in time the trust anchor / key pair is replaced, e.g., because better or more efficient security technology is available. The server generates a new key pair TA-1-PRK and TA-1-PUK with another, a new algorithm ALG2 (step KeyGen at time t2 - the choice of t2 is to suggest that between t0 and t2 server-device communication would occur, i.e., to provide software updates). Finally, the original key is replaced at time t4 (which may be done with a substantial delay after key generation during which further updates may be provided secured with key TA-0-PRK - such an update may also be necessary to prepare for technical requirements to use the new key and the new algorithm).

At time t4 the new key is provided. The original key TA-0-PRK is used to sign an update package UPD that comprises the new public key TA-1-PUK and the corresponding algorithm ALG2. On the device side, the signature is verified by means of the original public key TA-0-PUK and the original algorithm ALG0. The new public key TA-1-PUK and the new algorithm ALG2 are installed. Finally, the old public key TA-0-PUK and the old algorithm ALG0 may be removed from the device.

Especially in view of future post-quantum cryptography, the conventional way to perform firmware updates may lead to security risks, e.g., TA-0-PUK may be no longer trusted in the future due to advancements in quantum computing technologies, hence no updates are possible.

This invention comprises a method to prepare a device for the transition of a trust anchor to validate and verify future firmware and software updates that will be secured with new cryptographic algorithms, potentially not known at the time in which the device is first imprinted with a trust anchor, for example, during its production or integration in a system. The method relies on a digital signature algorithm that is assumed to be secure at the time the device is updated (e.g., a One-Time Signatures (OTS) or a stateful hash-based signature scheme).

One-Time Signature (OTS) algorithms are digital signature algorithms that can be used to sign only one artifact. They are considered very secure, but they can be used only once. So, they are not suitable for general use but are useful in the present invention. Examples of OTS based on hash functions are:
- Lamport-OTS: https://en.wikipedia.org/wiki/Lamport_signature
- Winternitz-OTS: https://datatracker.ietf.org/doc/html/rfc8391

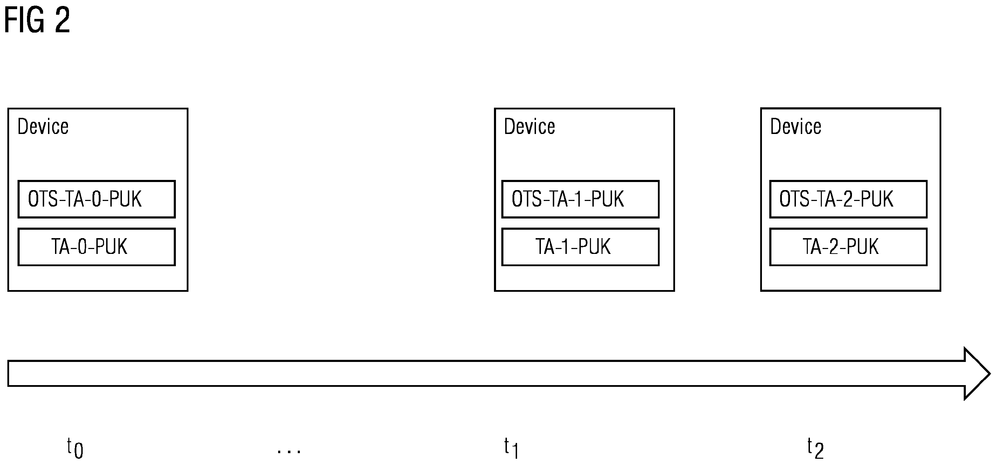

An inventive concept is illustrated in Fig. 2. It works as follows:
1. A device is imprinted with a trust anchor TA-0-PUK generated with a current digital signature algorithm (ALG0), e.g., during manufacturing time, defined as t0, into a system.
   - The trust anchor includes, among any other relevant metadata, the public key of a key pair associated with a digital signature algorithm.
   - The private key TA-0-PRK is securely stored by the manufacturer or the system integrator.
   - The private key TA-0-PRK will be used to sign firmware updates by the integrator or the manufacturer.
   - The device will use the trust anchor to validate and verify the signature and proceed with the firmware installation upon successful signature validation.
   - In practice, today, ALG0 would be e.g., DSA, ECDSA, EdDSA, ..., but it could be any other digital signature algorithm.
2. A digital signature key pair with an additional digital signature algorithm (ALG1) is created and the respective public key, OTS-TA-0-PUK, is imprinted on the device at manufacturing time. This key pair acts as a "bridge" to transition the trust anchors. This invention works under the assumption that this bridge key pair is secure at the time the trust anchors are transitioned.
   - In practice, a convenient choice of the additional digital signature algorithm (ALG1) is an OTS digital signature scheme (e.g., a Lamport-OTS or Winternitz-OTS). This type of scheme currently offers the maximum-security guarantees. However, ALG1 can be any digital signature algorithm (e.g., Dilithium, SPHINCS+, Falcon, XMSS, XMSS^MT, LMS, HSS, ...) or a hybrid digital signature algorithm or any other digital signature algorithm that can be trusted in the future.
3. At a time t1, when the digital signature algorithm (ALG0) used to generate TA-0-PUK shall be transitioned to a further digital signature algorithm (ALG2), the following steps are applied:
   - The manufacturer generates a new key pair using the digital signature scheme (ALG2), where the public key is indicated with TA-1-PUK. In a variant of this embodiment, the manufacturer generates an additional key pair using the digital signature scheme (ALG1), where the public key is indicated with OTS-TA-1-PUK. Note that any other algorithm that can be considered secure can be used in this step.
   - The manufacturer signs TA-1-PUK with OTS-TA-1-PUK. In a variant of this embodiment, the manufacturer additionally signs OTS-TA-1-PUK.
   - The device should be capable of verifying signatures using algorithm ALG2 with the public key TA-1-PUK. This can be accomplished with an intermediary step, where the device receives a firmware update, that allows it to use algorithm ALG2 or it can be received together with the update that contains TA-1-PUK and OTS-TA-1-PUK. The firmware update is signed via the private key OTS-TA-1-PRK that corresponds to OTS-TA-1-PUK. (In a variant of this embodiment any other key that is still considered trusted, other than TA-0-PUK, available to the device can be used to validate and verify the signature on the firmware update.)
   - The manufacturer creates a firmware update that contains TA-1-PUK, OTS-TA-1-PUK, the software for verifying digital signatures using ALG2, and signs it with the private key OTS-TA-1-PRK associated with OTS-TA-1-PUK.
   - The device can validate and verify the signature on the firmware update and upgrade itself to include new functionalities and or security features, like for example revoking TA-0-PUK and replacing it with a new trust anchor.
4. At a time t2, the device can be updated again to replace TA-1-PUK with TA-2-PUK and additionally inject a new OTS-TA-2-PUK, i.e., steps 1 to 3 are executed again with an appropriate choice of algorithms, to achieve a similar state as the initial imprinting and be prepared for the next transition.

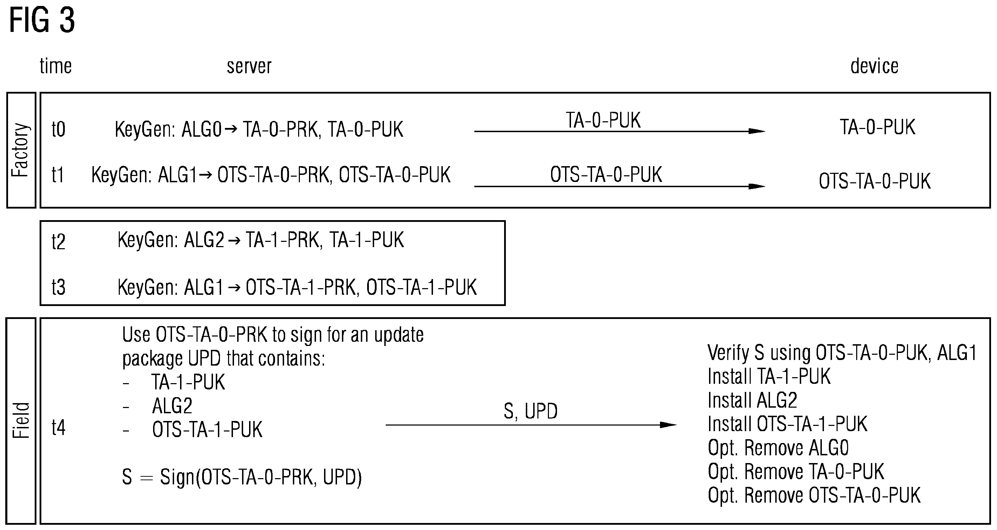

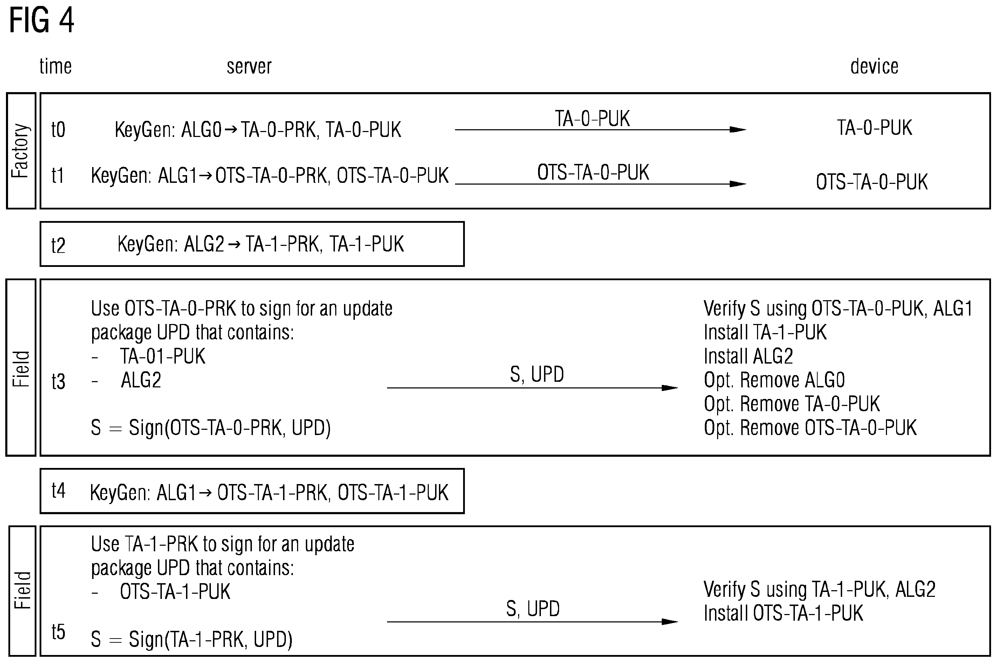

Fig. 3 and Fig. 4 show flow charts for embodiments.

In Fig. 3 an example for a key (trust anchor) transition according to the invention is illustrated via flow chart. Algorithm ALG0 is for example an RSA-based scheme (RSA: Rivest-Shamir-Adleman). In addition to the public key TA-0-PUK an OTS key is provided to the device. An OTS key pair OTS-TA-0-PRK and OTS-TA-0-PUK is generated at the factory at time t1 via an algorithm ALG1 (e.g. Lamport-OTS or Winternitz-OTS). The corresponding public key OTS-TA-0-PUK is transferred to the device. That is, at times t0 and t1 both server and device are in the factory, e.g., during manufacturing. The server imprints the trust anchor TA-0-PUK and the "bridge" (emergency) trust anchor OTS-TA-0-PK on the device before deployment in the field.

For update to a new trust anchor / key pair keys are generated at times t2 and t3 at the factory/server. The device itself can be in the factory, in a warehouse, already deployed by the customer, etc. The exact situation is not relevant to the update scheme according to the invention. In any case, new trust anchors TA-1-PUK and OTS-TA-1-PUK are generated on the server in a trusted environment. The new algorithm ALG2 may be a ML-DSA / Dilithium digital signature scheme.

The trust anchor transition is carried through at time t4. An update package UPD is generated that contains the new public key TA-1-PUK, the new algorithm ALG2 and the new OTS public key OTS-TA-1-PUK. The package is signed via the original OTS private key OTS-TA-0-PRK and provided to the device (package UPD and signature S). The device verifies the signature using the public key OTS-TA-0-PUK and the corresponding algorithm ALG1. Thereupon, the provided public keys TA-1-PUK and OTS-TA-1-PUK as well as the algorithm ALG2 for using the new public key TA-1-PUK are installed and the old elements (ALG0, TA-0-PUK, OTS-TA-0-PUK) are conveniently removed (the corresponding private keys TA-0-PRK and OTS-TA-0-PRK as well as algorithm ALG0 may be removed on the server too).

In Fig. 3, the frames around steps indicate different situations in the course of deploying the device which are described below.

t0 and t1: both server and device are in the factory e.g. during manufacturing; the server imprints the trust anchor TA-0-PUK and the "bridge" (emergency) trust anchor OTS-TA-0-PK on the device.

t2 and t3: the device can be in the factory, in a warehouse, already deployed by the customer, etc. It is not relevant which of these circumstances applies. The new trust anchors TA-1-PUK and OTS-TA-1-PUK are generated on the server in a trusted environment t4: at this time, the device is typically deployed in the field (because it requires interaction to be updated) - in Fig. 3 ALG2 means a software tool (e.g., a cryptographic software library) that enables algorithm ALG2 on the device.

Fig. 4 shows another variant which is similar to the variant of Fig. 3. In the following, only the differences are explained. The key pair OTS-TA-1-PRK and OTS-TA-1-PUK is only generated via algorithm ALG1 after the device was updated to the new trust anchor TA-1-PUK (generation at time t4). The new key pair TA-1-PRK and TA-1-PUK are used to provide the device with the one-time key pair OTS-TA-1-PRK and OTS-TA-1-PUK for a future trust anchor transition. Thus, at time t5 private key TA-1-PRK is used to sign an update package UPD that contains the one-time public key OTS-TA-1-PUK. After transmission of the update package UPD and the signature S to the device, the signature S is verified by means of the public key TA-1-PUK and the corresponding algorithm ALG2. Finally, the public key OTS-TA-1-PUK is installed. In short, for this variant the generation of new trust anchor (TA-1-PUK) and the generation of the new OTS key (OTA-TA-1-PUK) happen at times t2, t4 interleaved by t3. The new trust anchor TA-1-PUK is used for uploading OTA-TA-1-PUK at t5.

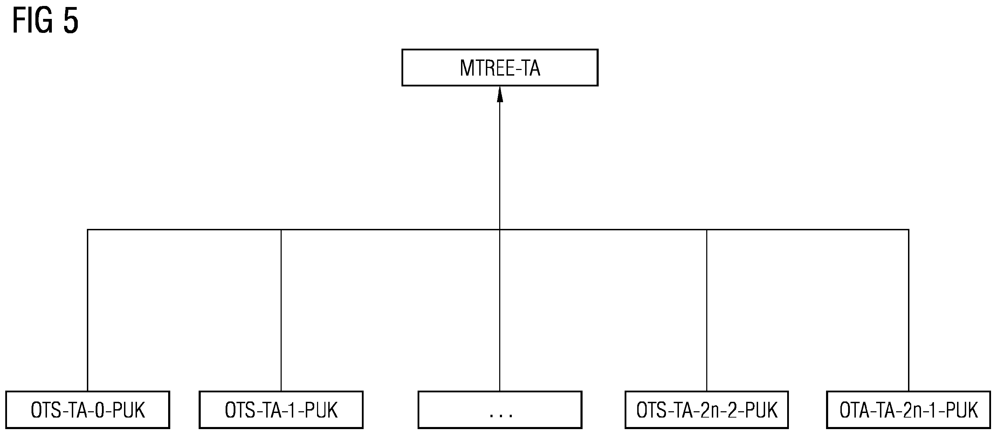

In a variant of this invention, instead of directly storing a one-time public key OTS-TA-0-PUK, whose imprinting on the device is described above, a tree structure is used to bundle together multiple one-time public keys, OTS-TA-0-PUK, OTS-TA-1-PUK, etc. The root of the tree structure MTREE-TA is imprinted on the device instead of storing individual one-time keys OTS-TA-0-PUK, OTS-TA-1-PUK, ... keys. The tree structure may for example be a Merkle tree like the one used in LMS or XMSS digital signature algorithms. The tree structure has 2n associate one-time private keys referred to as OTS-TA-0-PRK to OTS-TA-2n-1-PRK that can be used to sign 2n distinct public keys, referred to as OTS-TA-0-PUK to OTS-TA-2n-1-PUK as shown in Fig. 5.

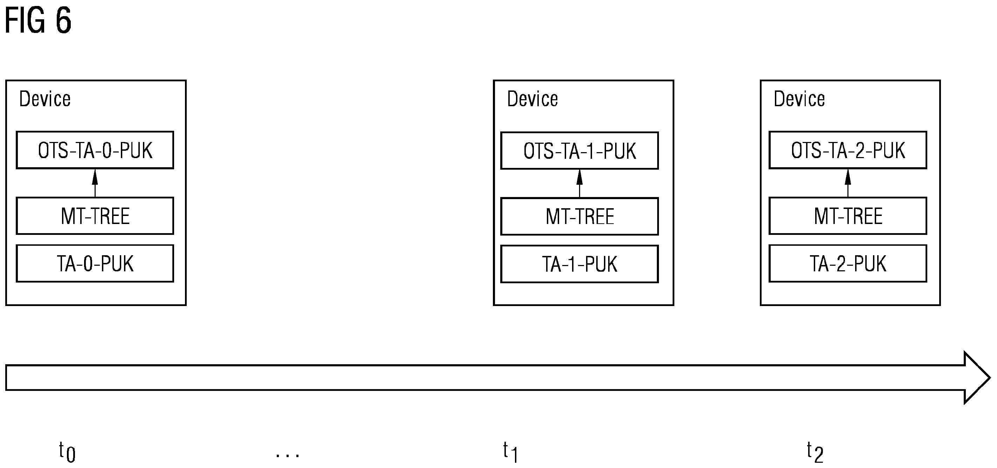

The public keys OTS-TA-0-PUK to OTS-TA-2n-1-PUK may not be stored to the device at the time when the MTREE-TA is imprinted on the device during manufacturing. They can be deployed for trust anchor transition (cf. Fig. 6).

The imprinting and update process can be described as follows:
1. A device is imprinted with a trust anchor MTREE-TA, during manufacturing time, defined as t0, into a device.
2. The manufacturer creates a key pair TA-0-PRK and TA-0-PUK, using a state-of-the-art cryptographic algorithm ALG0. TA-0-PUK is as well imprinted during manufacturing into a device..
3. The manufacturer signs firmware updates using the private key TA-0-PRK associated with TA-0-PUK and ships them to the device, together with the corresponding signatures.
4. The device can validate the firmware update using TA-0-PUK as long as TA-0-PUK is considered trusted and not broken..
5. At time t1 TA-0-PUK is flagged for replacement because, for example, the digital signature algorithm associated with it will no longer deemed suitable for verification of the firmware update.. At this point in time, the manufacturer creates a new key pair, whose corresponding public key is labelled as TA-1-PUK, using the state-of-the-art digital signature algorithm of his or her choice ALG2. If needed, the manufacturer creates a firmware update that includes the cryptographic libraries required by the device to validate and verify digital signatures using ALG2. The manufacturer signs the firmware update with the private key OTS-TA-0-PRK that corresponds to OTS-TA-0-PUK and sends it to the device. The device can successfully validate and verify the firmware update using MT-TREE and, after updating itself, be able to validate any signature created with the private key TA-1-PRK associated to TA-1-PUK. From this point on the manufacturer can sign future firmware updates using the private key TA-1-PRK associated to TA-1-PUK and phase out TA-0-PUK and its associated private key TA-0-PRK.

This variant has the advantage that if a device stores the trust anchor (or a reference of it, like a hash value of the trust anchor) in a unmodifiable memory like eFuses where it is not possible to update it, i.e., it is not possible to replace it, then this mechanism supports naturally transitioning to a new one-time public key, only relying on the security of the root hash MT-TREE.

This variant has the drawback that the manufacturer or integrator needs to keep tracks of the already used private keys in order to avoid key re-usage.. Risks that stem from this drawback can be mitigated by choosing a small enough number of private key defined as 2n. Practical examples could be with n=4 or n=8. The choice can be made estimating the expected lifetime of the device in the field and the number of expected cryptographic transitions for each trust anchor.

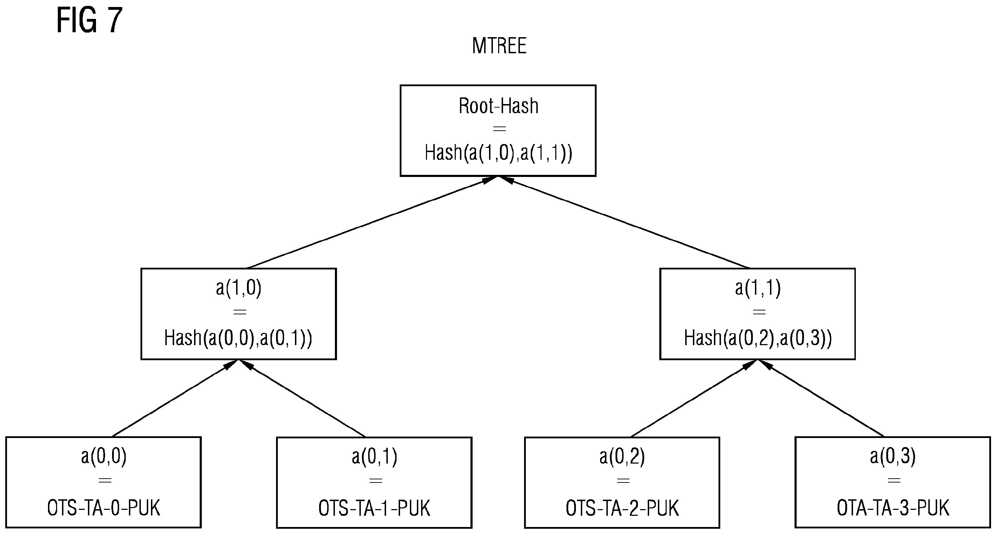

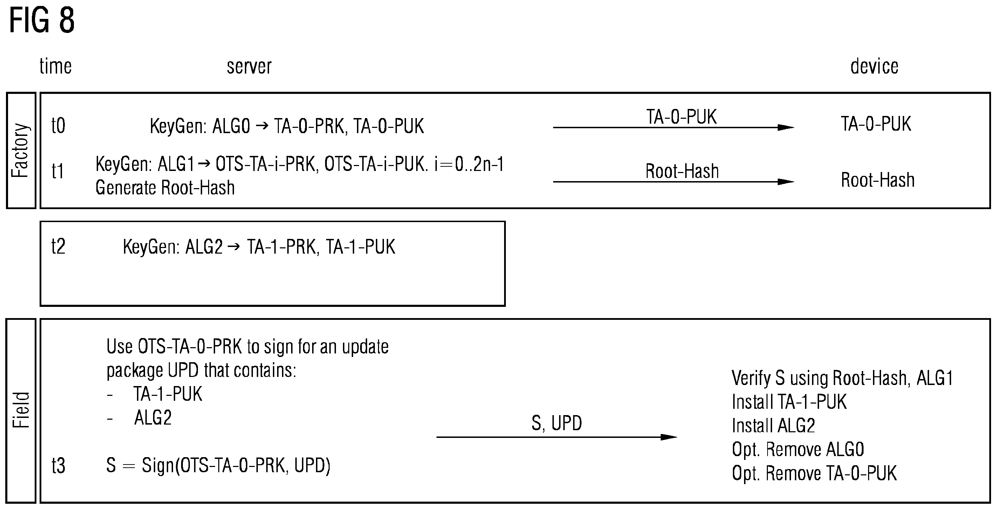

Below, the variant of this concept employing a Merkle tree is further illustrated via a flow chart. By way of example, a Merkle tree is show in Fig. 7. The leaves are the public keys, a binary tree is generated by applying a hash-function to the public keys resulting in a Root-Hash at the top. The Root-Hash is use as a public key for verification (MT-TREE). The concept is shown in the flow chart of Fig. 8. At time t1 OTS key pairs OTS-TA-i-PRK, OTS-TA-i-PUK. i=0..2n-1, are generated via algorithm ALG1. The Merkle tree is calculated, and Root-Hash (MT-TREE) is imprinted in the device and forms part of the trust anchor. A new trust anchor / key pair is set up as in the previous embodiment of Fig. 3). At time t3 the new key is deployed. An update package UPD is formed including the new public key TA-1-PUK and the corresponding algorithm ALG2. The package is signed by the private key OTS-TA-0-PRK of the Merkle tree and sent to the device. The server also provides the corresponding public key OTS-TA-0-PUK. This public key OTS-TA-0-PUK is typically included into the signature S (not explicitly shown in the Fig. 3). In order to calculate Root-Hash, a(0, 1) and a(1,1) from Fig. 3 are needed, too. These nodes a(0,1) and a(1, 1) are typically also included into the signature S as a part of the tree validation path (not explicitly shown in Fig. 3).

On the device side, the signature is verified by using the public key OTS-TA-0-PUK and algorithm ALG1 as well as by calculating the value of Root-Hash MT-TREE (from OTS-TA-0-PUK, a(0,1) and a(1,1) for the hash-tree of Fig. 5). Upon successful verification, the new public key TA-1-PUK together with the corresponding algorithm ALG2 are installed. Optionally, the old public key TA-0-PUK and the old algorithm ALG0 are removed.

The steps at t2 and t3 can be repeated using different OTS-TA-i-PRK, OTS-TA-i-PUK keys until the OTS keys are exhausted.

After the OTS are exhausted, then the variant of Fig. 3 can be used for uploading further OTS keys or Root-hashes.

To summarize, a major difference to a typical state-of-the-art method is:
- The present invention allows to prepare a device for the transition of trust anchors, e.g., plain keys or public key certificates, by imprinting a trust anchor at manufacturing time and leveraging it later, while the device is already in the field, to securely update the device to verify firmware updates with a state-of-the-art digital signature algorithm that might not be yet known at manufacturing time. This approach relies on the security of an intermediate digital signature algorithm, e.g. an OTS, which is used only to upgrade the trust-anchor, and assumed to remain secure until the trust anchor has been updated.

The invention comes with numerous advantages, e.g.:
- This approach allows to migrate a trust anchor in the future to an algorithm not yet known today.
- This approach allows to migrate a trust anchor in the case the trust anchor itself cannot be longer trusted.
- The variant that employees a tree structure can be used to migrate to stronger cryptography also devices that store a trust anchor in unmodifiable memory that otherwise would not be possible to migrate.
- The invention allows for secure transition from classical to post-quantum algorithms (but it should be noted that it is not limited to this application scenario).

## Claims

1. A method for secure replacement of a device trust anchor for a device associated with a device manufacturer, comprising
a) providing the device with a trust anchor comprising a public key of a key pair associated with the device manufacturer,
b) generating a one-time key pair,
c) preparing the device for replacing the public key of the PKI key pair with a new public key by an update secured via a private key of the one-time key pair,
d) generating a new PKI key pair,
e) providing an update to the device including the public key of the new PKI key pair and a signature from the private key of the one-time key pair,
f) verifying the signature via the public key of the one-time key pair, and
g) installing the new public key of the new PKI key pair.

2. The method of claim 1, wherein
One of the steps a), b), c) and d) or a combination thereof are performed in a trusted environment with the device secured from outside interference.

3. The method of claim 1 or 2, wherein
the update of step e) comprises software for installation of an algorithm used with the new PKI key pair.

4. The method of claim 1 or 2, wherein
an update with software for installation of an algorithm used with the new PKI key pair and a signature from the private key of the key pair in use is sent prior to step e).

5. The method of one the preceding claims, comprising
removing the public key replaced by the new public key and/or the software for using the algorithm associated with the replaced public key from the device.

6. The method of one of the preceding claims, wherein
the step of
c) preparing the device for replacing the public key of the PKI key pair with a new public key by an update secured via a private key of the one-time key pair
comprises
providing the device with the public key of the one-time key pair.

7. The method of one of the preceding claims, comprising
generating another one-time key pair, and
including the public key of this one-time key pair in the update of step e).

8. The method of one of the preceding claims 1 to 6, comprising
- generating another one-time key pair, and
- sending the public key of this one-time key pair in an update signed with the private key of the new PKI key pair to the device.

9. The method of one of the preceding claims, wherein
- step c) comprises
-- generating multiple one-time keys,
-- building a hash tree from the one-time keys, and
-- providing the device with the root-hash value of the Merkle tree,
- including information for calculating the root-hash value in the update of step e),
- using a private one-time key of the tree for the signature of the update of step e), and
- verifying the signature of the update of step e) by calculating the root-hash.

10. A system, comprising a server and a device, characterized that the system is configured to perform a method according to one of the claims 1 to 9.
